(19) Europäisches Patentamt / European Patent Office / Office européen des brevets

(11) **EP 4 472 936 B1**

(12) **EUROPEAN PATENT SPECIFICATION**

(45) Date of publication and mention
of the grant of the patent:
**19.11.2025 Bulletin 2025/47**

(21) Application number: **22839750.1**

(22) Date of filing: **16.12.2022**

(51) International Patent Classification (IPC):
**C04B 7/24** *(2006.01)*    **C04B 28/06** *(2006.01)*
**C04B 103/00** *(2006.01)*    **C04B 111/60** *(2006.01)*
**C04B 111/00** *(2006.01)*

(52) Cooperative Patent Classification (CPC):
(C-Sets available)
**C04B 7/246; C04B 28/065;** C04B 2103/0042;
C04B 2103/0088; C04B 2111/00637; C04B 2111/60
(Cont.)

(86) International application number:
**PCT/EP2022/086438**

(87) International publication number:
**WO 2023/186344 (05.10.2023 Gazette 2023/40)**

(54) **SUPPLEMENTARY CEMENTITIOUS MATERIALS FROM RECYCLED CEMENT PASTE**

KLINKERERSATZMATERIALIEN AUS RECYCELTEM ZEMENTSTEIN

MATÉRIAUX CIMENTAIRES SUPPLÉMENTAIRES À PARTIR DE PÂTE DE CIMENT RECYCLÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022 EP 22166002**

(43) Date of publication of application:
**11.12.2024 Bulletin 2024/50**

(73) Proprietor: **Heidelberg Materials AG**
**69120 Heidelberg (DE)**

(72) Inventors:
• **SKOCEK, Jan**
**69120 Heidelberg (DE)**
• **ZAJAC, Maciej**
**69120 Heidelberg (DE)**
• **BULLERJAHN, Frank**
**69120 Heidelberg (DE)**
• **BOLTE, Gerd**
**69120 Heidelberg (DE)**
• **SCHADE, Tim**
**69120 Heidelberg (DE)**

(74) Representative: **Zellentin & Partner mbB**
**Patentanwälte**
**Rubensstraße 30**
**67061 Ludwigshafen (DE)**

(56) References cited:
**US-A1- 2021 032 162    US-A1- 2022 153 641**

(52) Cooperative Patent Classification (CPC): (Cont.)

C-Sets
**C04B 7/246, C04B 7/46, C04B 7/47;**
**C04B 28/065, C04B 7/02, C04B 7/32, C04B 20/008,**
**C04B 2103/0088**

**Description**

The present invention relates to a method for producing a supplementary cementitious material from concrete waste and similar materials. Further, the invention relates to the supplementary cementitious material obtainable by the method according to the invention. The invention also relates to the use of the supplementary cementitious material for making hydraulic building materials. Moreover, the invention relates to a hydraulic binder comprising the supplementary cementitious material and the use of the hydraulic binder.

Cement industry is struggling with the high $CO_2$ emissions related to the production of cement clinker. Since the demand for cement is increasing worldwide, the emission will further increase. Furthermore, construction and demolition waste (CDW) is the largest stream of solid wastes in developed countries. Consequently, there is a demand for further reduction of the emission associated with cement production and to increase recycling of the CDW. The easiest way to limit this environmental footprint is to produce composite cements or to increase the usage of supplementary cementitious material during the concrete production. Unfortunately, the increase of the proportion of the composite cements in the product portfolio is limited by the availability of high quality supplementary cementitious material, i.e. reactive materials resulting in appreciable strength evolution.

Utilization of recycled concrete components helps to achieve better sustainability and to conserve the resources of natural aggregate and clinker raw materials.

Tang et al., Resources, Conservation & Recycling: X 6, 100036, 1 - 22, 2020, shows economical and sustainable alternatives for the disposal of municipal and construction waste by recycling it into manufacturing sustainable construction material. In particular, the authors suggest recycling the concrete waste for geopolymer precursors.

ES 2592953 A1 and Rodríguez-Galán et al., Materials, 12, 208, 1 - 19, 2019 describe a method to provide cementitious material obtained from the fusion, and subsequent cooling, of certain mixtures of waste and/or industrial by-products. The mixture of waste and/or industrial by-products is composed of 20 % - 45 % by weight of waste from construction and demolition plants, 40 % - 80 % by weight of waste from the aquaculture industry and 5 % - 30 % by weight of waste from recycling or recovery plants. The obtained slag comprises inter alia 38.05 % $SiO_2$, 11.42 % $Al_2O_3$, 1.77 % $Fe_2O_3$, 42.63 % CaO and 1.44 % MgO. This results in a ratio of $SiO_2$ / (CaO +MgO) of > 1. The obtained slag has a vitreous phase of 85 - 90 %.

EP 2 168 930 A1 relates to a vitreous material with hardening properties. The vitreous material is derived from high temperature melting of a material containing Ca, Mg, Si, Al, Fe in the form of oxides or carbonates. The melted material is cooled quickly. The obtained vitreous material has a ratio of $SiO_2$ / (CaO + MgO) > 0.9.

These proposals rely on starting materials with high Ca content which many waste materials do not have.

EP 2 168 930 A1 and ES 2 592 953 A1 describe a manufacturing of cementitious material by melting waste at high temperature. According to EP 2 168 930 A1 the chemical composition of the raw materials must be such that a content of calcium, silicon, magnesium and aluminium expressed as oxides is greater than 70 % and the mass ratio (CaO+MgO)/$SiO_2$ greater than 0.9, optimally from 1.3 to 1.6, the content of $Al_2O_3$ greater than 2 %, the $Na_2O$ equivalent from 0-8 % and the content of $SO_3$ from 0-20%. ES 2 592 953 A1 requires that the product conforms to the requirement in the standards, especially EN 197-1 and EN15167-1. This means inter alia a content of calcium, silicon and magnesium oxides is greater than 66 % and the mass ratio (CaO+MgO)/$SiO_2$ greater than 1. These requirements cause high efforts. The products are foreseen as addition to hydraulic cements.

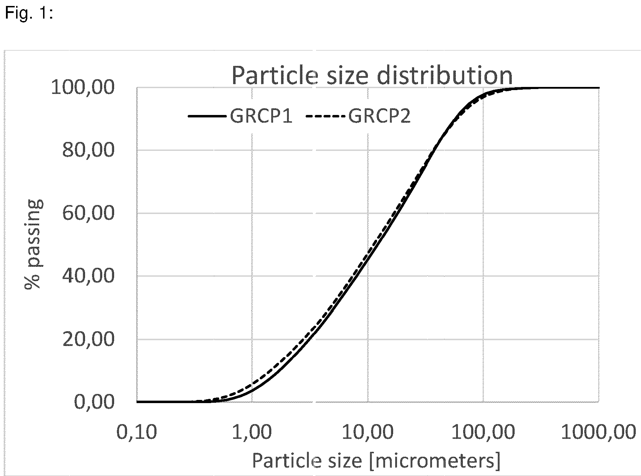

The article H.A. Abdel-Gawwad et al., "Recycling of concrete waste to produce ready-mix alkali activated cement", Ceramics International (2018), https://doi.org/10.1016/j.ceramint.2018.01.042 examined a burning of finely ground concrete waste with 5, 10 and 15 % by weight added sodium hydroxide at temperatures of 1100 and 1200 °C. With 15 % by weight sodium hydroxide and 1200 °C products were formed that upon mixing with water developped high strenghts. The XRD spectra depicted in figure 1 of this document prove that the product had a very low amorphous content eventhough it is said that the crystalline phases are transformed to amorphous ones. The usefulness of the product is limited, strenghts available in mortars or concrete are not reported.

US 2021/032162 describes melting-quenching process of various inorganic materials to provide SCM.

Thus, there is still a need for providing reactive supplementary cementitious material (SCM). Further, more efficient ways to recycle waste concrete, especially concrete demolition waste, are needed.

Surprisingly, it was now found that melting CDW in a thermal treatment and subsequent rapid cooling provides a synthetic glass that is a reactive SCM and also very useful as alkali activated binder upon addition of an activator.

Thus, the mentioned problem is solved by a method comprising a thermal treatment of a starting material comprising hydrated cement until it is melted, followed by a rapid cooling of the melted mixture, especially water cooling. Specifically, in a first aspect the invention relates to a method for producing a supplementary cementitious material comprising Ca, Si, Mg, Al, and Fe, having an X-ray amorphous proportion of at least 60 % by weight based on the total weight of the supplementary cementitious material the amount of CaO ranges from 20 to 45 % by weight based on the total weight of the supplementary cementitious material, and having a mass ratio 0.45 <

$$\frac{m(CaO) + m(MgO)}{m(SiO_2)} < 0.9$$

where m is the mass fraction of oxide determined from the amounts of the oxides measured by X-ray fluorescence (XRF), comprising the steps

> i) providing a starting material comprising hydrated cement,
> ii) melting the starting material provided in step i) in a furnace, preferably in an electric arc furnace or gas-fired furnace, at a temperature between 1000 °C to 1800 °C or 1700 °C obtaining a melted mixture,
> iii) subsequent rapid cooling of the melted mixture obtained in step ii) by direct contact with water adjusting an X-ray amorphous proportion of at least 60 % by weight, based on the total weight of the supplementary cementitious material, to provide the supplementary cementitious material. In a second aspect, the invention relates to the supplementary cementitious material obtainable by the method as defined above and below. The invention also relates to a use of the supplementary cementitious material for manufacturing alkali activated binders, their manufacturing and to alkali activated binders comprising the supplementary cementitious material and an alkali silicate activator. In a third aspect, the invention relates to the use of the supplementary cementitious material obtainable by the method defined above and below for making hydraulic building materials. In a fourth aspect, the invention relates to a hydraulic binder comprising the supplementary cementitious material obtainable by the method as defined above and below. In a fifth aspect, the invention relates to the use of the hydraulic binder for making hydraulic building materials.

The present invention has the following advantages:

- It is possible to provide an essentially $CO_2$-free SCM, which is derived from concrete waste, demolition waste, or similarly composed waste.
- It is possible to provide a SCM, which exhibits high quality, while keeping the flexibility of using feedstock of variable chemical and mineralogical composition.
- It is possible to replace a higher content of cement clinker by the SCM according to the invention due to the improved availability of the SCM with at the same time a high quality of the SCM.
- It is possible to provide essentially $CO_2$-free alkali activated binders as full replacement of classical hydraulic cements like Portland cement.

To simplify the description the following abbreviations that are usual in the field of cement are used herein: H - $H_2O$, C - CaO, A - $Al_2O_3$, F - $Fe_2O_3$, M - MgO, N - $Na_2O$, K - $K_2O$, S - $SiO_2$ and $ - $SO_3$. Compounds are mostly named by the pure form, without explicit mentioning of solid solutions, foreign ion substitution and impurities etc. as are usual in technical and industrial materials. As it is known by a skilled person, the exact composition of the phases described may vary due to substitution with foreign ions. Such compounds are comprised herein when mentioning the pure form unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

According to the invention the term glassy shall mean X-ray amorphous.

In the context of the invention cement is used to designate a material that, after mixing with water to form a paste, is able to develop mechanical strength by hydraulic reaction. Thus, cement denotes a ground clinker or analogous hydraulic phases obtained by other routes, like dicalcium silicate cement obtained by hydrothermal treatment. Binder or binder mixture means a material or mixture containing cement and developing mechanical strength by a hydraulic reaction with water, wherein the binder typically but not necessarily contains more components than the cement. Thus, geopolymer binder, super sulphated cement and composite cements are termed binder herein. A binder is used adding water or another liquid and mostly also aggregates as well as optionally admixtures and/or additives, to provide a paste that hardens resulting in a building structure. Therefore, paste herein means a mixture of binder with water, especially but not limited to concrete and mortar.

A supplementary cementitious material (SCM) is herein defined as a pozzolanic and/or latent hydraulic material useful to replace a part of the cement in a binder or in a hydraulically hardening building material. Latent hydraulic materials have a composition that allows hydraulic reaction upon contact with water, wherein typically an activator is needed to enable hardening within technically feasible times. Activator means a substance that accelerates the hardening of latent hydraulic materials. It can be an additive like a sulfate or calcium hydroxide/calcium oxide/their mixture and/or products of the hydraulic reaction of the ground clinker, e.g. calcium silicates that liberate calcium hydroxide during hydration.

Pozzolanic materials are typically characterized by a content of reactive silica and/or alumina which form strength providing calcium silicate hydrates and calcium aluminate hydrates, respectively, during hydration of the clinker together with the calcium hydroxides liberated. These materials may contain reactive magnesium and iron and other reactive elements. In practice the boundary between latent hydraulic and pozzolanic materials is not clearly defined, for example fly ashes can be both, latent hydraulic and pozzolanic, depending on their calcium oxide content. Consequently, the term SCM designates both, latent hydraulic as well as pozzolanic materials. However, not reactive or only slightly reactive materials like limestone that substantially do not take part in the hydraulic reaction have to be clearly differentiated from SCM, with which they are sometimes summarized as mineral additions.

Alkali activated binders are inorganic binders synthesized from source materials rich in silicates and aluminates. Like the classical cements hardening by hydraulic reaction, they can be mixed to a pourable paste. However, the strength developing process results from a chemical reaction of silica and alumina under alkaline conditions and the hardened product is an amorphous three-dimensional crosslinked aluminosilicate polymer structure. Due to this, they are often designated geopolymers, but this designation should only be used for alkali activated binders with low CaO in the source material. In order to obtain the three-dimensional crosslinked aluminosilicate polymer structure, the silicates and aluminates have to be provided by an appropriate choice of raw materials. Common are e.g., siliceous fly ash, calcareous fly ash, granulated blast furnace slag, silica fume, and kaolinite, i.e. mostly materials useful as SCM. The reactivity of the raw materials, that significantly influences the final performance of the binder, originates from intrinsic material properties, such as volume fraction of reactive glassy phase, chemical composition of glassy phase, free lime content, unburned carbon and reactive surface. A high volume fraction of glassy phase is beneficial for the binder reactivity due to its high solubility. Additionally, the chemical composition determines the reactivity: The higher the CaO content, the higher is the reactivity. Unburned carbon increases the demand for activator and water, which negatively influences the binder performance and costs. Finally, the higher the reactive surface, the higher is the solubility of the source material. The activator provides high pH conditions in order to corrode the glassy structures of the alumino-silicates in the source material. Additionally, it can contribute silica and alkali oxide supporting the formation of the hardened three-dimensional crosslinked aluminosilicate polymer structure. The activator can be composed of different compounds, often mixtures are used:

- alkali and/or alkaline earth metal silicates, e.g., sodium or potassium silicate, sodium metasilicate anhydrous or pentahydrate
- alkali and/or alkaline earth metal hydroxides, e.g., sodium hydroxide, calcium hydroxide, potassium hydroxide
- alkali and/or alkaline earth metal carbonates, e.g., sodium carbonate
- Portland cement.

The alkaline activator can be added as a liquid or as a solid compound. In the solid state the activator is preferably ground together with the alumino-silicate sources in order to enhance reactivity. In many cases a simple mixing of the dry components is sufficient. When source materials like ground granulated blast-furnace slag (abbreviated GGBS) and calcareous fly ash are used which contain high amounts of CaO, hydration processes comparable to classical cements are initiated in alkali activated binders based on them. Besides the three-dimensional crosslinked aluminosilicate polymer structure, inter alia calcium silicate hydrates (abbreviated C-S-H) and calcium aluminate hydrates (abbreviated C-A-H) or calcium silicate aluminate hydrates (abbreviated C-A-S-H) are formed. The water consuming hydration process increases the pH level of the pore solution and consequently the rate of dissolution. Thus, the presence of calcium contributes to the mechanical strength of the resulting hardened matrix not only by forming C-S-H, C-A-H and C-A-S-H but also by enhancing the polymerization process. The mix design of alkali activated binders is complex, several key material parameters have to be considered, namely the type of source material (high/low CaO), the activator content and the $SiO_2/M_2O$-ratio (M = alkali metal ion) of the activator, called modulus. Additionally, the water/binder ratio and curing temperature have a substantial influence.

In the context of the invention hydraulically hardening building material means a wet mixture that is able to harden hydraulically, and comprises a cement or binder as well as optionally any other additives and/or admixtures contained to adjust the properties like final strength, processability of the wet mixture and strength development properties, to the intended use of the building material. For example, a concrete used to build a bridge needs other properties than a screed for casting a floor or a mortar for laying bricks. In contrast, hydraulic building material designates both wet mixtures and dry mixtures. The latter are often ready to be used after mixing with water like tile adhesives, but can also require adding other components, like cements.

Building structure denotes the hardened building material.

The supplementary cementitious material according to the invention is obtained by thermal treatment of a starting material comprising hydrated cement. Thus, in the method for producing a reactive supplementary cementitious material a starting material comprising hydrated cement is provided in step i). Other waste material useful for the method according to the invention is such characterized by an analogous chemical/mineralogical composition.

A preferred starting material in step i) is based on waste concrete. In particular the starting material is waste concrete. Virtually any kind of building structure is useful as source for the waste concrete.

The cement having originally been used to make the hydrated cement can be any cement or binder, most common are standard cements as defined in e.g. EN 197-1. However, other cements like calcium aluminate cements, calcium sulfoaluminate cements, dicalcium silicate cements obtained from hydrothermal treatment and tempering or reactive grinding, and binders like geopolymer binders, super sulphated cements, and other special binders are equally possible. The important component for the starting material is hydrated cement, i.e. calcium in the form of silicate and/or aluminate hydrates. When cement or binders harden with water (hydration), a hydrated cement results and on the one hand calcium silicate hydrate phases, abbreviated C-S-H, and/or calcium aluminate hydrate phases grow, and on the other hand portlandite, abbreviated CH ($Ca(OH)_2$), is formed. C-S-H has a very variable composition. Calcium aluminate hydrate phases are for example, but not exclusively, mono sulfate, abbreviated AFm, and ettringite. Also phases containing both silicate and aluminate hydrate can form. Portlandite is a rare mineral, so named because of its similarity to Portland cement. It forms along with C-S-H from excess calcium in the cement phases.

Likewise, there is no restriction to the further components having been used to make the hydraulically hardening building materials that in turn hardened into building structures. Typically aggregate and water were added as well as usual admixtures and/or additives.

In one embodiment, the waste concrete is derived from demolished hardened building materials, especially from demolished concrete structures like buildings, bridges, road surfaces etc.. As is known per se, the concrete demolition waste is crushed and possibly ground. If needed foreign materials like wood, plastic and metal are removed, at least most of them. The crushed and optionally ground material is then usually separated based on size into recycled concrete aggregate (RCA) and recycled concrete fines (RCF). RCA is the coarser fraction and contains most of the aggregate, RCF contains mainly the hardened paste (RCP) and varying amounts of the fine aggregate. Depending on the separation method and conditions applied, the hardened paste can be detached more or less from the aggregate during providing of the RCA and RCF. Both finer crushing, optionally grinding, as well as applying attrition force in a carbon dioxide containing atmosphere can enhance detaching the paste from the aggregate. Thus, it is envisaged that aggregate with varying sizes can also be provided more or less free from RCP, such materials are not suitable as starting material on their own. RCF containing both RCP and aggregate (usually mainly sand) is a preferred starting material and can often be used as is. Typically, RCA has a $D_{10} > 500$ $\mu$m and RCF a $D_{10} > 150$ $\mu$m and a $D_{90} < 500$ $\mu$m, while RCP generally has a $D_{90} < 150$ $\mu$m.

In another embodiment the waste concrete material is derived from residues from concreting and/or from cleaning concreting equipment. Concrete and also mortar are frequently made in larger amounts than needed to avoid having not enough for a given building step. Also, it occurs that delays are so long that a batch of concrete or mortar cannot be used as planned and has to be discarded. Further, mixing devices, tools, moulds, etc. having been used to make and/or place the paste have to be cleaned which is usually accomplished by rinsing with water. Thereby, residues containing hardened paste and varying amounts of water are obtained. Solid residues can be utilized in the same way as concrete demolition waste, i.e. crushed and/or ground, possibly in the presence of carbon dioxide, to obtain RCF. Liquid residues typically need to be concentrated in solids, maybe dried, to obtain an RCF slurry or dry RCF. The aggregate content in liquid residues is normally low, typically only fine aggregate is present, if at all. Suitable devices to remove water are e.g. filters.

The waste concrete material can also be a mixture of materials, especially of the described materials.

Optionally other waste material, aggregates, different types of slags, fly ashes, red mud, waste glass and/or natural materials such as volcanic pozzolan or calcined clay can be included in the starting material or can be added in step i).

Preferably, the starting material comprises at least one of the following amounts of elements, calculated as oxides, with respect to the total starting material weight:

- 10 to 30 % by weight CaO, preferably20 to 30 % by weight CaO,
- 0 to 10 % by weight MgO, preferably 1 to 8 % by weight MgO,
- 20 to 60 % by weight $SiO_2$, preferably 22 to 50 % by weight $SiO_2$,
- 3 to 10 % by weight $Al_2O_3$, preferably 4 to 8 % by weight $Al_2O_3$ and/or
- 1 to 5 % by weight $Fe_2O_3$, preferably 2 to 4 % by weight $Fe_2O_3$

with the remainder being other metal oxides and predominantly loss on ignition (LOI) at 1050 °C.

If needed crushing and/or grinding or alternatively pelletizing is carried out with devices and methods well known to one skilled in the art to adjust particle size or form as needed for the melting device used in step ii). Crushing and/or grinding occurs in devices known in the art to obtain a starting material with the desired particle sizes, e.g. a $D_{90} \leq 500$ $\mu$m or $\leq 1$ mm or $\leq 2$ mm. The pelletizing can be done by compacting the material using state of the art technologies such as, but not exclusively, placing the loose materials in forms and by applying pressure, using a pelletizing table, preparing a suspension and using a filter press and/or adding a hydraulic binder. The pellet size can range from 0.5 mm to 50 cm, preferably from 0.5 cm to 30 cm and most preferred from 2 cm to 20 cm

In step ii) the starting material provided in step i) is melted in a furnace, preferably an electric arc furnace, induction furnace, flame furnace or gas-fired furnace, especially in an electric arc furnace or gas-fired furnace.

The melting of the starting material is carried out at a temperature from 1000 °C to 1800 °C or 1700 °C, preferably at a temperature from 1100 °C to 1600 °C. Preferably, the melting is carried out for a period of time from 10 to 60 min, preferably from 15 to 30 min.

Preferably, the melting is carried out in a reductive atmosphere. The term "reductive atmosphere" means an atmosphere in which no oxidation of the material occurs. As is known per se, a reductive atmosphere can be provided by excluding oxygen and/or by adding/burning materials capturing oxygen. The added/burnt material capturing oxygen is preferably selected from coal, hydrogen, sulfur, ammonia, hydrocarbons and mixtures thereof. Suitable hydrocarbons for capturing oxygen are in principle known by a skilled person. The hydrocarbon is preferably methane.

In step iii) the melted mixture obtained in step ii) is subjected to rapid cooling. Thereby, the X-ray amorphous phase content is adjusted to at least 60 % by weight based on the total weight of the supplementary cementitious material. Preferably, the X-ray amorphous content is from 60 to 95 % by weight, especially preferred from 80 to 95 % by weight, most preferred at least 90 % by weight, based on the total weight of the supplementary cementitious material.

Various cooling systems and heat transfer media known to the skilled person with different energy recovery potential can be used for cooling, such as: cooling systems with water ("quenching" with or without vortex etc.), cooling systems with air (granulation etc.), cooling systems with high energy recovery potential.

Preferably the ratio of the mass of water to the mass of the melted mixture is preferably greater than 10.

The cooling rate is defined herein as the cooling rate between the temperature at which the liquid solidifies (normally greater than 1000 °C) and the temperature ensuring that crystallization of the solid state is no longer possible. Herein, the latter is taken as less than 400 °C to have a sufficient safety margin. Preferably, the cooling rates are at least 60 °C/minute, especially from 65 °C/min to 80 °C/ min.

The supplementary cementitious material obtained in step iii) preferably has a particle size distribution (PSD) with a $D_{90}$ from 5 $\mu$m to 500 $\mu$m, more preferred from 10 $\mu$m to 200 $\mu$m, especially preferred from 25 $\mu$m to 90 $\mu$m. In a preferred embodiment, the supplementary cementitious material has a Rosin Rammler slope n in the range from 0.6 to 1.4, especially preferred from 0.7 to 1.2. PSD is measured by laser diffraction, using e.g. Malvern Mastersizer 2000, isopropanol as dispersant and Fraunhofer model as quantification method.

It is also possible to recover metallic Fe from the quenched mixture obtained in step iii).The recovery step of metal Fe may be performed by applying energy to the SCM obtained in step iii). The step of applying energy may be performed by applying an electric field or a magnetic field to the SCM obtained in step iii) to facilitate the separation process. The recovery step of metal Fe can take place in all of the production stages such as directly after the quenching, after the crushing of dried material and/or after the grinding of the SCM obtained in step iii). Preferably, the metal Fe recovery is conducted directly after the quenching. It can be done with or without prior drying of the obtained SCM in step iii). In another embodiment the metal Fe recovery is performed after the fine grinding of the SCM obtained in step iii). In such case, metallic Fe is recovered as embedded metallic Fe clusters in glassy matrix with overall Fe concentration of at least 40 % expressed as oxides.

The product obtained in step iii) is a supplementary cementitious material comprising a high amount of pozzolanic phases. Usually, at least 90 % by weight, based on the total weight of the supplementary cementitious material, in particular 90 to 100 % by weight, especially 95 to 99 % by weight, based on the total weight of the supplementary cementitious material, exhibit pozzolanic properties. Consequently, the SCM according to the invention usually has neither hydraulic nor latent hydraulic properties.

An important parameter of the supplementary cementitious material is the so-called basicity, which describes the ratio of CaO (or CaO + MgO) to $SiO_2$ (or $SiO_2 + Al_2O_3 + Fe_2O_3$). Accordingly, supplementary cementitious materials can be divided into "acidic" or "basic", with CaO and MgO being the basic components and $SiO_2$, $Al_2O_3$ and $Fe_2O_3$ the acidic ones. In other words, the basicity of supplementary cementitious material is an empirical quantity, which in its simplest form indicates the mass ratio of CaO and $SiO_2$. The concept of supplementary cementitious material basicity B therefore has nothing to do with chemical basicity, but is based solely on the fact that CaO, unlike the second component of the supplementary cementitious material (e.g. $SiO_2$), forms the basic substance calcium hydroxide ($Ca(OH)_2$) when reacting with water. The simplest basicity, $B_0$, is defined as:

$$B_0 = \frac{m(CaO)}{m(SiO_2)}$$

wherein m refers to mass. It is also possible to take into account further components like MgO, $Al_2O_3$, $Fe_2O_3$, which are also assigned to basic or acidic fractions. Accordingly, the basicity $B_1$ and $B_2$ are defined as:

$$B_1 = \frac{m(CaO) + m(MgO)}{m(SiO_2)} \qquad B_2 = \frac{m(CaO) + m(MgO)}{m(SiO_2) + m(Al_2O_3)}$$

A supplementary cementitious material with a basicity greater than one is referred to as basic supplementary cementitious material and with a basicity of less than one is referred to as acidic supplementary cementitious material.

According to the invention the supplementary cementitious material is basic, i.e. it has a mass ratio of

$$B_1 = \frac{m(CaO) + m(MgO)}{m(SiO_2)}$$

determined from the amounts of the oxides measured by X-ray fluorescence (XRF). In other words, the supplementary cementitious material according to the invention has a basicity $B_1$ in the range from 0.45 to 0.9, preferably in the range from 0.45 to 0.8. The basicity $B_0$ ranges preferably from 0.40 to 1.25. Still further, the basicity $B_2$ ranges from 0.4 to 1.2.

Further, the SCM usually has a $CaO/Fe_2O_3$ ratio $B_3$

$$B_3 = \frac{m(CaO)}{m(Fe_2O_3)}$$

in the range from 8 to 350, preferably $B_3$ is at least 9. The basicities $B_0$, $B_1$, $B_2$ and $B_3$ are determined by the equations as defined above.

The supplementary cementitious material according to the invention is a synthetic glass. Generally, it comprises Si, Ca, Mg, Al, and Fe in the form of oxides and other chemical compounds. Preferably, the amount of the sum of CaO and MgO is in the range from 10 to 35 % by weight, more preferred from 15 to 30 % by weight, based on the total weight of the supplementary cementitious material. Further, the amount of the sum of $Al_2O_3$ and $Fe_2O_3$ is preferably in the range from 5 to 40 % by weight, more preferred from 8 to 30 % by weight, based on the total weight of the supplementary cementitious material. It is also preferred that:

- the amount of $SiO_2$ is in the range from 25 to 65 % by weight and/or
- the amount of MgO is in the range from 0.5 to 10 % by weight and/or
- the amount of $Al_2O_3$ is in the range from 4 to 20 % by weight and/or
- the amount of $Fe_2O_3$ is in the range from 0 to 2 % by weight. As usual, the amounts are calculated as oxides, regardless of the actual compound being present.

A further embodiment of the invention is the use of the supplementary cementitious material as defined above and obtained by the method defined above for making hydraulic building materials such as cements, binders, concrete, mortar, and special construction chemical mixtures like screed and tile adhesive.

Preferably, the supplementary cementitious material according to the invention can be used as main component in a composite binder, such as but not limited to cements analogous to CEM II, CEM IV, or CEM V according to EN 1971, geopolymer binders (also called alkali activated binders), and super sulphated cements. In another preferred embodiment the supplementary cementitious material according to the invention can be used as minor component in a composite binder. The SCM can be ground together or separately from all or some of the other binder components. The supplementary cementitious material according to the invention can also be used as addition for concrete and mortar, i.e. be added during making the wet mixture instead of being mixed with the cement or binder.

A further embodiment of the invention is a composite binder comprising the supplementary cementitious material as defined above and obtainable by the method as defined above and a cement. The cement is preferably selected from Portland cement, Portland composite cement, calcium sulfoaluminate cement, calcium aluminate cement and dicalcium silicate cement. Preferred cements are such according to EN 197-1, calcium sulfoaluminate cement and calcium aluminate cement.

In a preferred embodiment the composite binder comprises

- 1 to 88 % by weight, based on the total weight of the binder, supplementary cementitious material as defined above, based on the total weight of the binder, and
- 22 to 99 % by weight based on the total weight of the binder, cement as defined above.

Additional SCMs can be comprised in the composite binder, and are pozzolanic and/or latent hydraulic materials useful to replace a part of the cement. Such additional SCM is chemically different from the SCM according to the invention. The additional SCM is preferably selected from ground granulated blast-furnace slag, fly ash, silica fume, slate and natural pozzolans.

Admixtures can be contained to optimize the properties like setting time, hardening time, spread, viscosity, and homogeneity, as well as to impart desired properties to the final hardened building material like strength, flexural modulus, freeze-thaw-resistance and many more. These admixtures are known per se and are used in their usual amounts. Admixtures like water reducing agents, plasticizers and super plasticizers to adjust consistency while keeping the w/b in the suitable range are preferred admixtures. Useful water reducing agents, plasticizers and super plasticizers are for example, but not exclusively, organic compounds with one or more functional groups selected from carboxylate, sulfonate, phosphonate, phosphate or alcohol functional groups. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acid and their salts, phosphonates, sugars (saccharides). Furthermore, it is possible to use admixtures that improve the concrete durability performance like air entrains or hydrophobic agents. Admixtures can also be added to the binder, if they are dry substances.

Often, also additives are contained. Usual are glass fibres, polymer fibres, cement kiln dust, silica fume, pigments, for example. One or more of them can be used in the usual amount. Additives are often added to the binder, since most are dry substances.

For use the composite binder according to the invention is made into a hydraulically hardening building material, e.g. into mortar or concrete, by mixing with water. Typically, a water to binder weight ratio (w/b) from 1 to 0.1, preferably from 0.75 to 0.15, and most preferred from 0.65 to 0.35 is used. The SCM according to the invention and one or more optional additional SCMs added are included into the amount of binder for calculating the w/b. The mortar or concrete usually also contains aggregates as well as optionally admixtures and/or additives.

A further embodiment of the present invention is a method for manufacturing a hydraulic binder as defined above, comprising

    a) providing the supplementary cementitious material as defined above,
    b) blending the supplementary cementitious material of a) with at least one cement as defined above to provide the binder,
    c) optionally blending the binder of b) with the at least one admixture and/or additive and/or aggregate.

A further embodiment of the invention is a hydraulic building material such as concrete or mortar comprising the supplementary cementitious material or binder as defined above.

Another embodiment of the invention is a method for manufacturing alkali activated binders comprising providing the supplementary cementitious material as defined above and mixing it with an alkali silicate having a modulus (i.e. mass ratio $SiO_2/M_2O$ with M being an alkali metal ion) $\leq 3.0$ to provide the alkali activated binder and the alkali activated binder obtainable thereby. Such alkali activated binders show a surprisingly improved reactivity compared with activation by alkali hydroxides or cement. Like classical cements they are useful for making building materials such as concrete, mortar, and special construction chemical mixtures like screed and tile adhesive.

Typically, the alkali activated binder according to the invention and made according to the invention comprises from 1 to 40 % by weight, preferably from 5 to 35 % by weight, most preferred from 10 to 30 % by weight alkaline activator, calculated as dry material with respect to the sum of supplementary cementitious material and alkaline activator dry material. The alkaline activator is an alkali silicate, preferably sodium and/or potassium silicate, most preferred potassium silicate.

The activator is an alkali silicate with a modulus (molar ratio $SiO_2/M_2O$, where M is an alkali cation) of $\leq 3.0$ according to the invention. Preferably the modulus is up to 2.0 and most preferred ranges from 1.0 to 2.0. As the alkali cation sodium, potassium or lithium are preferred, most preferred is potassium. The activator can be solid or liquid. Preferably, an alkali silicate solution or an alkali silicate solution adjusted by an alkali hydroxide up to a modulus of at most 2.5 is used as the activator.

The alkali activated binder according to the invention or made by the method according to the invention can also contain additional silica and alumina sources. Generally all natural and synthetic materials that provide silica and alumina in amorphous form, so that the dissolution in alkaline environment and subsequent formation of the three-dimensional network can take place, are useful. Preferably, the additional silica and alumina source is one or more of fly ashes, which can be siliceous or calcareous; ground granulated blast furnace slag and other slags containing alumina and silica glassy phase; clays, especially kaolinitic clays and metakaolin; silica dust; rice husk ash; trass; and red mud. Depending on the chemical composition single materials or mixtures are used, so that the desired alumina content, silica content, other parameters like ratio Si/Al and ratio (Si+Al)/Ca can be adjusted as desired. Typically, up to 80 % by weight additional silica and alumina source can be used, preferably up to 50 % by weight, most preferred up to 25 % by weight, all with respect to the total (solid) amount of silica and alumina source.

The alkali activated binder according to the invention or made by the method according to the invention can also contain a filler, especially calcareous fillers like limestone, dolomite or mixtures thereof or siliceous fillers like quartz powder, sandstone powder, stone dust (porphyry, granite, diabase, gabbro, basalt) or mixtures thereof. Suitable amounts are ≤ 5 % by weight or ≤ 10 % by weight or ≤ 20 % by weight, with respect to the total weight of alkali activated binder. Higher amounts of filler like up to 50 % by weight or up to 75 % by weight or up to 95 % by weight are also possible. Such binders have a lower performance, i.e. lower final strength and/or slower strength development.

Unlike Portland cement (OPC) and composite cements from OPC the range of admixtures useful in alkali activated binders is limited. However, known admixtures can be used in their known amounts. Successfully used admixtures are for example described in EP 3 296 278 A1 and the references cited therein.

Further, for using the alkali activated binder according to the invention or obtainable according to the invention for making a building material it is mixed with water and/or the liquid activator is added with or without additional water. Typically, aggregate is added as far as the supplementary cementitious material is not provided as a mixture with aggregate or the aggregate mixed with it is not enough and/or has not the desired sizes. Known additives, such as but not limited to fillers and pigments, can also be added in amounts known per se. The components apart supplementary cementitious material and alkaline activator and the mix design are adapted to the intended use.

Preferred building materials are concrete and mortar. For those, a water/binder weight ratio (w/b) from 0.2 to 0.6 is usually suitable, often from 0.2 to 0.5 or from 0.2 to 0.4. Alkali activated binders are usually very sensitive to even small changes in w/b, therefore, water added as part of the activator, an admixture, additive or other component of the building material is typically taken into account for the w/b.

Further, the binder according to the invention or obtainable according to the invention can be used to manufacture construction chemical products like tile adhesive and screed as building material. The specific composition of such products is normally internal knowhow of the producer. It is expected that some adaptation of the composition is needed to exchange Portland cement or composite cements based on Portland cement in a construction chemical product. However, this can easily be accomplished by one of ordinary skill in the art.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

Figure 1: Particle size distribution of GRCP 1 and GRCP 2.

Example 1

Two industrial RCPs (RCP 1 and RCP 2) were obtained from concrete demolition waste and used for glass preparation. The chemical compositions (in % by weight) of RCP 1 and RCP 2 determined by XRF (X ray fluorescence) and stated as oxides are listed in table 1 and 2. The loss on ignition (LOI) is reported as well. About 5 kg of each RCP was melted in graphite crucibles in an induction furnace at 1800 °C ± 50 °C and held constant for 30 min at the targeted temperature. In order to produce vitreous structure molten glasses were rapidly quenched in a water ice bath. Afterwards, magnetic particles were removed using a magnet. The compositions (in % by weight) of the resulting SCMs (glass compositions GRCP 1 and GRCP 2) are listed in table 3a, table 3b lists the Blaine surface and basicities. The SCMs (GRCP 1 and GRCP 2) were ground in a laboratory ball mill to Blaine fineness of about 4000 cm$^2$/g.

Table 1: Chemical composition of RCPs

|  | RCP 1 | RCP 2 |
|---|---|---|
| LOI at 1050 °C | 22.6 | 18.5 |
| SiO$_2$ | 43.0 | 43.5 |
| Al$_2$O$_3$ | 4.7 | 6.6 |
| TiO$_2$ | 0.3 | 0.4 |

(continued)

|  | RCP 1 | RCP 2 |
|---|---|---|
| MnO | 0.1 | 0.1 |
| $Fe_2O_3$ | 2.2 | 2.2 |
| CaO | 23.2 | 23.0 |
| MgO | 1.1 | 2.6 |
| $K_2O$ | 0.9 | 1.0 |
| $Na_2O$ | 0.4 | 0.5 |
| $SO_3$ | 0.9 | 1.5 |
| $P_2O_5$ | 0.1 | 0.1 |
| Total | 99.5 | 99.9 |

Table 2:

|  | RCP 1 | RCP 2 |
|---|---|---|
| Quartz | 33 | 29 |
| Calcite | 32 | 11 |
| Amorphous | 21 | 39 |
| Other | 13 | 21 |
| Total | 100 | 100 |

Table 3a: Resulting chemical compositions of GRCPs:

|  | GRCP 1 | GRCP 2 |
|---|---|---|
| LOI at 1050 °C | 0 | 0 |
| $SiO_2$ | 58.8 | 54.8 |
| $Al_2O_3$ | 6.0 | 9.0 |
| $TiO_2$ | 0.4 | 0.5 |
| MnO | 0.1 | 0.1 |
| $Fe_2O_3$ | 0.7 | 0.8 |
| CaO | 30.3 | 30.0 |
| MgO | 1.0 | 3.0 |
| $K_2O$ | 1.0 | 1.3 |
| $Na_2O$ | 0.5 | 0.6 |
| $SO_3$ | 0.5 | 0.5 |
| $P_2O_5$ | 0.02 | 0.02 |
| Total | 100.5 | 100 |
| Amorphous content | 98.7 | 99.8 |

Table 3b: Blaine surface and basicities of GRCPs:

|  | GRCP 1 | GRCP 2 |
|---|---|---|
| Blaine | 4270 $cm^2/g$ | 4180 $cm^2/g$ |
| B0 | 0.51 | 0.55 |
| B1 | 0.53 | 0.60 |

(continued)

|     | GRCP 1 | GRCP 2 |
|-----|--------|--------|
| B2  | 0.48   | 0.52   |
| B3  | 42.80  | 38.56  |

Cements were prepared from 57.3 % by weight ground industrial Portland clinker, 38.2 % by weight ground glasses as SCM (GRCP 1 and GRCP 2) and 4.5 % by weight ground anhydrite. Limestone-containing cement was also prepared as reference. The cement clinker and limestone were each ground to 4000 $cm^2$/g Blaine fineness in a laboratory ball mill. Finally, materials were homogenized using the same device.

Compressive strength was measured in mortars after 1, 2, 7 and 28 days. The mortars were prepared from the cements, quartz sand with a $D_{50}$ of 0.4 mm and water in weight ratios 2:3:1.1, i.e. at water-to-cement ratio of 0.55, and mixed according to DIN EN 196-1. The mortars were cast into steel moulds to produce cubes 2 cm x 2 cm x 2 cm. These cubes were tested for compressive strength according to DIN EN 196-1, with same load rate in stress per seconds as in the norm. For each testing date, 5 cubes were tested and the result reported below is an average. The properties of the final cement compositions (stated as oxides in % by weight) are listed in table 4a. The measured strengths are listed in table 4b.

Table 4a:

|                | CEM-L | CEM-GRCP 1 | CEM-GRCP 2 |
|----------------|-------|------------|------------|
| LOI at 1050 °C | 16.8  | 0.2        | 0.1        |
| $SiO_2$        | 12.3  | 33.7       | 32.1       |
| $Al_2O_3$      | 3.4   | 5.7        | 6.5        |
| $TiO_2$        | 0.2   | 0.3        | 0.3        |
| MnO            | 0.03  | 0.1        | 0.1        |
| $Fe_2O_3$      | 2.2   | 2.4        | 2.4        |
| CaO            | 59.2  | 50.1       | 50.1       |
| MgO            | 1.3   | 1.6        | 2.3        |
| $K_2O$         | 0.8   | 1.3        | 1.3        |
| $Na_2O$        | 0.1   | 0.3        | 0.4        |
| $SO_3$         | 3.1   | 3.4        | 3.4        |
| $P_2O_5$       | 0.1   | 0.1        | 0.1        |
| Total          | 99.5  | 99.1       | 99.2       |

Table 4a:

|                                | CEM-L | CEM-GRCP 1 | CEM-GRCP 2 |
|--------------------------------|-------|------------|------------|
| compressive strength 1d [MPa]  | 10.3  | 9.7        | 9.6        |
| compressive strength 2d [MPa]  | 19.9  | 19.7       | 19.7       |
| compressive strength 7d [MPa]  | 29.4  | 29.3       | 30.1       |
| compressive strength 28d [MPa] | 35.0  | 50.0       | 51.7       |

Example 2

Alkali activated binders were made from melted recycled concrete paste as supplementary cementitous material and four different alkaline activators. The recycled concrete paste paste had the composition as shown in table 5.

Table 5

| XRF | RCP |
|---|---|
| LOI 1050 °C | 18.5 |
| $SiO_2$ | 43.5 |
| $Al_2O_3$ | 6.6 |
| $TiO_2$ | 0.4 |
| MnO | 0.1 |
| $Fe_2O_3$ | 2.2 |
| CaO | 23.0 |
| MgO | 2.6 |
| $K_2O$ | 1.0 |
| $Na_2O$ | 0.5 |
| $SO_3$ | 1.5 |
| $P_2O_5$ | 0.1 |
| Total | 99.9 |
| quartz | 26.5 |
| calcite | 10.0 |
| amorphous | 34.5 |
| albite | 4.2 |
| microcline | 3.3 |
| clinker phases | 1.0 |
| others | 15.8 |

The tested activators were potassium silicate solution with a modulus of 1.5, sodium silicate solution with a modulus of 3.2, a dry sodium carbonate, and a sodium hydroxide solution with a concentration of 10 mol/l. For preparation of the samples, the supplementary cementitious material (or binder) was mixed 30 seconds with the aggregate (sand), then 1 minute with the activator (or water) at a water/binder ratio of 0.375 (0.4 for sodium silicate due to poor workability), and the obtained paste was poured into a plastic cup as mould. The dry activator was mixed with the source material in such an amount that 10 % by weight sodium carbonate with respect to the binder were present. Instead of mixing with the activator, those samples were mixed with water. Each sample contained 3 g of binder and 4.5 g of aggregate. The samples were stored 24 hours at 20 °C and 65 % relative humidity. Then, the samples were assessed by pressing them with a spatula and trying to remove them from the cup. Only the sample made with potassium silicate having a modulus below 3.0 could be demoulded. The other samples were still wet and could not be demoulded. Further tests with sodium silicate having a modulus from 1.0 to 2.0 provided samples with appreciable strength which could be demoulded.

**Claims**

1.  A method for producing a supplementary cementitious material comprising Ca, Si, Mg, Al, Fe, wherein the X-ray amorphous proportion is at least 60 % by weight based on the total weight of the supplementary cementitious material, the amount of CaO ranges from 20 to 45 % by weight based on the total weight of the supplementary cementitious material, and having a mass ratio

$$0.45 < \frac{m(CaO) + m(MgO)}{m(SiO_2)} < 0.9$$

determined from the amounts of the oxides measured by X-ray fluorescence (XRF), comprising the steps

i) providing a starting material comprising hydrated cement

ii) melting the starting material provided in step i) in a furnace at a temperature between 1000 °C to 1800 °C obtaining a melted mixture,

iii) subsequent rapid cooling of the melted mixture obtained in step ii) by direct contact with water adjusting an X-ray amorphous proportion of at least 60 % by weight based on the total weight of the supplementary cementitious material to provide the supplementary cementitious material.

2. The method according to claim 1, wherein the starting material comprising hydrated cement is obtained from waste concrete or waste material, which has an analogous chemical/mineralogical composition.

3. The method according to claim 1 or 2, wherein the starting material comprises one or more of the following based on the total weight of the starting material:

- 10 to 30 % by weight CaO, preferably 20 to 30 % by weight CaO,
- 0 to 10 % by weight MgO, preferably 1 to 8 % by weight MgO,
- 20 to 60 % by weight $SiO_2$, preferably 22 to 40 % by weight $SiO_2$,
- 3 to 10 % by weight $Al_2O_3$, preferably 4 to 8 % by weight $Al_2O_3$, and/or
- 1 to 5 % by weight $Fe_2O_3$, preferably 2 to 4 % by weight $Fe_2O_3$.

4. The method according to any of the preceding claims, wherein the supplementary cementitious material has pozzolanic properties, preferably comprises 90 to 100 % by weight, especially 95 to 99 % by weight, pozzolanic phases based on the total weight of the supplementary cementitious material.

5. A supplementary cementitious material obtainable by the method defined in anyone of claims 1 to 4.

6. The supplementary cementitious material according to claim 5 having a particle size distribution with a $D_{90}$ from 5 μm to 500 μm, more preferred from 10 μm to 200 μm, especially preferred from 25 μm to 90 μm, measured by laser diffraction.

7. The supplementary cementitious material according to claim 5 or 6 having a Rosin Rammler slope n in the range from 0.6 to 1.4, preferably from 0.7 to 1.2.

8. A method for manufacturing an alkali activated binder wherein a supplementary cementitious material defined in anyone of claims 5 to 7 or obtainable by the method defined in anyone of claims 1 to 4 is provided and mixed with an alkali silicate having a modulus ≤ 3.0 as alkaline activator to provide the alkali activated binder.

9. A use of a supplementary cementitious material defined in anyone of claims 5 to 7 or obtainable by the method defined in anyone of claims 1 to 4 for making alkali activated binders, wherein the supplementary cementitious material is mixed with an alkali silicate as alkaline activator.

10. An alkali activated binder comprising the supplementary cementitious material defined in anyone of claims 5 to 7 or obtainable by the method defined in anyone of claims 1 to 4 and an alkali silicate as alkaline activator.

11. The alkali activated binder according to claim 10, wherein the alkaline activator is selected from sodium silicate, potassium silicate and mixtures thereof, preferably is potassium silicate.

12. The alkali activated binder according to claim 10 or 11 comprising, based on the combined dry weight of the supplementary cementitious material and alkaline activator, 1 to 40 % by weight, preferably from 5 to 35 % by weight, most preferred from 10 to 30 % by weight, alkaline activator.

13. A use of a supplementary cementitious material defined in anyone of claims 5 to 7 or obtainable by the method defined in anyone of claims 1 to 4 for making composite binders.

14. A hydraulic binder comprising the supplementary cementitious material defined in anyone of claims 5 to 7 or obtainable by the method defined in anyone of claims 1 to 4 and a cement.

15. The hydraulic binder according to claim 14, wherein the cement is selected from Portland cement, calcium sulfoaluminate cement and calcium aluminate cement.

**16.** The hydraulic binder according to claim 14 or 15 comprising, based on the total weight of the hydraulic binder, 1 to 88 % by weight supplementary cementitious material and 22 to 99 % by weight cement.

**17.** A use of a supplementary cementitious material defined in anyone of claims 5 to 7 or obtainable by the method defined in anyone of claims 1 to 4 or according to claim 5 or of the hydraulic binder according to one of claims 14 to 16 for making hydraulic building materials, preferably concrete, mortar, screed or tile adhesive, in particular concrete.


**Patentansprüche**

**1.** Verfahren zur Herstellung eines Klinkerersatzmaterials, das Ca, Si, Mg, Al, Fe umfasst, wobei der röntgenamorphe Anteil bezogen auf das Gesamtgewicht des Klinkerersatzmaterials mindestens 60 Gew.-% beträgt, die Menge an CaO bezogen auf das Gesamtgewicht des Klinkerersatzmaterials im Bereich von 20 bis 45 Gew.-% liegt und ein mittels Röntgenfluoreszenz (XRF) gemessenen Mengen der Oxide bestimmtes Massenverhältnis von

$$0,45 < \frac{m(CaO) + m(MgO)}{m(SiO_2)} < 0.9$$

beträgt, umfassend die Schritte

i) Bereitstellen eines Ausgangsmaterials, das hydratisierten Zement umfasst
ii) Schmelzen des in Schritt i) bereitgestellten Ausgangsmaterials in einem Ofen bei einer Temperatur zwischen 1000 °C und 1800 °C, um eine geschmolzene Mischung zu erhalten,
iii) anschließendes schnelles Abkühlen der in Schritt ii) erhaltenen geschmolzenen Mischung durch direkten Kontakt mit Wasser, wodurch ein röntgenamorpher Anteil von mindestens 60 Gew.-% bezogen auf das Gesamtgewicht des Klinkerersatzmaterials eingestellt wird, um das Klinkerersatzmaterial bereitzustellen.

**2.** Verfahren gemäß Anspruch 1, wobei das Ausgangsmaterial, das hydratisierten Zement umfasst, aus Betonabfällen oder Abfallmaterial gewonnen wird, das eine analoge chemische/mineralogische Zusammensetzung aufweist.

**3.** Verfahren gemäß Anspruch 1 oder 2, wobei das Ausgangsmaterial eines oder mehrere der Folgenden, bezogen auf das Gesamtgewicht des Ausgangsmaterials, umfasst:

- 10 bis 30 Gew.-% CaO, vorzugsweise 20 bis 30 Gew.-% CaO,
- 0 bis 10 Gew.-% MgO, vorzugsweise 1 bis 8 Gew.-% MgO,
- 20 bis 60 Gew.-% $SiO_2$ , vorzugsweise 22 bis 40 Gew.-% $SiO_2$ ,
- 3 bis 10 Gew.-% Al, $O_3$, vorzugsweise 4 bis 8 Gew.-% Al, $O_3$, und/oder
- 1 bis 5 Gew.-% $Fe_2\,O_3$, vorzugsweise 2 bis 4 Gew.-% $Fe_2\,O_3$ .

**4.** Verfahren gemäß einem der vorstehenden Ansprüche, wobei das Klinkerersatzmaterial puzzolanische Eigenschaften aufweist, vorzugsweise bezogen auf das Gesamtgewicht des Klinkerersatzmaterials von 90 bis 100 Gew.-%, insbesondere von 95 bis 99 Gew.-%, puzzolanische Phasen, umfasst.

**5.** Klinkerersatzmaterial, erhältlich durch das Verfahren gemäß einem der Ansprüche 1 bis 4.

**6.** Klinkerersatzmaterial gemäß Anspruch 5 mit einer durch Laserbeugung gemessenen Partikelgrößenverteilung mit einem $D_{90}$ von 5 $\mu$m bis 500 $\mu$m, vorzugsweise von 10 $\mu$m bis 200 $\mu$m, besonders bevorzugt von 25 $\mu$m bis 90 $\mu$m.

**7.** Klinkerersatzmaterial gemäß Anspruch 5 oder 6 mit einer Rosin-Rammler-Steigung n im Bereich von 0,6 bis 1,4, vorzugsweise von 0,7 bis 1,2.

**8.** Verfahren zur Herstellung eines alkalisch aktivierten Bindemittels, bei dem ein Klinkerersatzmaterial gemäß einem der Ansprüche 5 bis 7 oder ein durch das Verfahren gemäß einem der Ansprüche 1 bis 4 erhältliches Klinkerersatzmaterial bereitgestellt und mit einem Alkalisilikat mit einem Modul $\leq$ 3,0 als alkalischem Aktivator gemischt wird, um das alkalisch aktivierte Bindemittel bereitzustellen.

9. Verwendung eines Klinkerersatzmaterials gemäß einem der Ansprüche 5 bis 7 oder eines durch das Verfahren gemäß einem der Ansprüche 1 bis 4 erhältlichen Klinkerersatzmaterials zur Herstellung von alkalisch aktivierten Bindemitteln, wobei das Klinkerersatzmaterial mit einem Alkalisilikat als alkalischem Aktivator gemischt wird.

10. Alkaliaktiviertes Bindemittel, umfassend ein Klinkerersatzmaterial gemäß einem der Ansprüche 5 bis 7 oder ein durch das Verfahren gemäß einem der Ansprüche 1 bis 4 erhältliches Klinkerersatzmaterial und ein Alkalisilikat als alkalischen Aktivator.

11. Alkalisch aktiviertes Bindemittel gemäß Anspruch 10, wobei der alkalische Aktivator aus Natriumsilikat, Kaliumsilikat und Mischungen davon ausgewählt ist, vorzugsweise Kaliumsilikat ist.

12. Alkalisch aktiviertes Bindemittel gemäß Anspruch 10 oder 11, umfassend, bezogen auf das kombinierte Trockengewicht des Klinkerersatzmaterials und des alkalischen Aktivators, von 1 bis 40 Gew.-%, vorzugsweise von 5 bis 35 Gew.-%, besonders bevorzugt von 10 bis 30 Gew.-%, des alkalischen Aktivators.

13. Verwendung eines Klinkerersatzmaterials gemäß einem der Ansprüche 5 bis 7 oder eines durch das Verfahren gemäß einem der Ansprüche 1 bis 4 erhältlichen Klinkerersatzmaterials zur Herstellung von Kompositbindemitteln.

14. Hydraulisches Bindemittel, umfassend das Klinkerersatzmaterial gemäß einem der Ansprüche 5 bis 7 oder ein durch das Verfahren gemäß einem der Ansprüche 1 bis 4 erhältliches Klinkerersatzmaterial und einen Zement.

15. Hydraulisches Bindemittel gemäß Anspruch 14, wobei der Zement aus Portlandzement, Calciumsulfoaluminatzement und Calciumaluminatzement ausgewählt ist.

16. Hydraulisches Bindemittel gemäß Anspruch 14 oder 15, das, bezogen auf das Gesamtgewicht des hydraulischen Bindemittels, von 1 bis 88 Gew.-% Klinkerersatzmaterial und von 22 bis 99 Gew.-% Zement umfasst.

17. Verwendung eines Klinkerersatzmaterials gemäß einem der Ansprüche 5 bis 7 oder eines durch das Verfahren gemäß einem der Ansprüche 1 bis 4 erhältlichen Klinkerersatzmaterials oder des hydraulischen Bindemittels gemäß einem der Ansprüche 14 bis 16 zur Herstellung von hydraulischen Baustoffen, vorzugsweise Beton, Mörtel, Estrich oder Fliesenkleber, insbesondere Beton.

**Revendications**

1. Procédé de production d'un matériau cimentaire supplémentaire comprenant du Ca, du Si, du Mg, de l'Al et du Fe, dans lequel la proportion d'éléments amorphes aux rayons X est d'au moins 60 % en poids par rapport au poids total du matériau cimentaire supplémentaire, la quantité de CaO est comprise entre 20 et 45 % en poids par rapport au poids total du matériau cimentaire supplémentaire, et présentant un rapport de masse

$$0,45 < \frac{m(CaO) + m(MgO)}{m(SiO_2)} < 0,9$$

déterminé à partir des quantités d'oxydes mesurées par fluorescence X (XRF), comprenant les étapes

i) fourniture d'un matériau de départ comprenant du ciment hydraté
ii) fusion du matériau de départ obtenu à l'étape i) dans un four à une température comprise entre 1 000 °C et 1 800 °C pour obtenir un mélange fondu ;
iii) refroidissement rapide ultérieur du mélange fondu obtenu à l'étape ii) par contact direct avec de l'eau ajustant la proportion d'éléments amorphes aux rayons X à au moins 60 % en poids par rapport au poids total du matériau cimentaire supplémentaire pour obtenir le matériau cimentaire supplémentaire.

2. Procédé selon la revendication 1, dans lequel le matériau de départ comprenant du ciment hydraté est obtenu à partir de déchets de béton ou de matériau déchet, qui présente une composition chimique/minéralogique analogue.

3. Procédé selon la revendication 1 ou 2, dans lequel le matériau de départ comprend un ou plusieurs des éléments suivants, par rapport au poids total du matériau de départ :

- 10 à 30 % en poids de CaO, de préférence 20 à 30 % en poids de CaO,
- 0 à 10 % en poids de MgO, de préférence 1 à 8 % en poids de MgO,
- 20 à 60 % en poids de $SiO_2$, de préférence 22 à 40 % en poids de $SiO_2$,
- 3 à 10 % en poids d'$Al_2O_3$, de préférence 4 à 8 % en poids d'$Al_2O_3$, et/ou
- 1 à 5 % en poids de $Fe_2O_3$, de préférence 2 à 4 % en poids de $Fe_2O_3$.

4. Procédé selon l'une quelconque des revendications précédentes, dans lequel le matériau cimentaire supplémentaire présente des propriétés pouzzolaniques et comprend de préférence 90 à 100 % en poids, en particulier 95 à 99 % en poids, de phases pouzzolaniques par rapport au poids total du matériau cimentaire supplémentaire.

5. Matériau cimentaire supplémentaire pouvant être obtenu par le procédé défini dans l'une quelconque des revendications 1 à 4.

6. Matériau cimentaire supplémentaire selon la revendication 5, présentant une distribution granulométrique avec un $D_{90}$ compris entre 5 $\mu$m et 500 $\mu$m, de préférence entre 10 $\mu$m et 200 $\mu$m, en particulier de préférence entre 25 $\mu$m et 90 $\mu$m, mesurée par diffraction laser.

7. Matériau cimentaire supplémentaire selon la revendication 5 ou 6, présentant une pente Rosin Rammler n comprise entre 0,6 et 1,4, de préférence entre 0,7 et 1,2.

8. Procédé de fabrication d'un liant alcalin activé, dans lequel un matériau cimentaire supplémentaire défini dans l'une quelconque des revendications 5 à 7 ou pouvant être obtenu par le procédé défini dans l'une quelconque des revendications 1 à 4 est fourni et mélangé à un silicate alcalin ayant un module ≤ 3,0 comme activateur alcalin pour obtenir le liant alcalin activé.

9. Utilisation d'un matériau cimentaire supplémentaire défini dans l'une quelconque des revendications 5 à 7 ou pouvant être obtenu par le procédé défini dans l'une quelconque des revendications 1 à 4 pour la fabrication de liants alcalins activés, dans lequel le matériau cimentaire supplémentaire est mélangé à un silicate alcalin comme activateur alcalin.

10. Liant alcalin activé comprenant le matériau cimentaire supplémentaire défini dans l'une quelconque des revendications 5 à 7 ou pouvant être obtenu par le procédé défini dans l'une quelconque des revendications 1 à 4, et un silicate alcalin comme activateur alcalin.

11. Liant alcalin activé selon la revendication 10, dans lequel l'activateur alcalin est choisi parmi le silicate de sodium, le silicate de potassium et les mélanges de ceux-ci, est de préférence du silicate de potassium.

12. Liant alcalin activé selon la revendication 10 ou 11, comprenant, par rapport au poids sec combiné du matériau cimentaire supplémentaire et de l'activateur alcalin, 1 à 40 % en poids, de préférence de 5 à 35 % en poids, et de manière préférée entre toutes de 10 à 30 % en poids, d'activateur alcalin.

13. Utilisation d'un matériau cimentaire supplémentaire défini dans l'une quelconque des revendications 5 à 7 ou pouvant être obtenu par le procédé défini dans l'une quelconque des revendications 1 à 4 pour la fabrication de liants composites.

14. Liant hydraulique comprenant le matériau cimentaire supplémentaire défini dans l'une quelconque des revendications 5 à 7 ou pouvant être obtenu par le procédé défini dans l'une quelconque des revendications 1 à 4, et un ciment.

15. Liant hydraulique selon la revendication 14, dans lequel le ciment est choisi parmi le ciment Portland, le ciment sulfoaluminate de calcium et le ciment aluminate de calcium.

16. Liant hydraulique selon la revendication 14 ou 15, comprenant, par rapport au poids total du liant hydraulique, 1 à 88 % en poids de matériau cimentaire supplémentaire et 22 à 99 % en poids de ciment.

17. Utilisation d'un matériau cimentaire supplémentaire défini dans l'une quelconque des revendications 5 à 7 ou pouvant être obtenu par le procédé défini dans l'une quelconque des revendications 1 à 4 ou selon la revendication 5 ou du liant hydraulique selon l'une des revendications 14 à 16 pour la fabrication de matériaux de construction hydrauliques, de préférence de béton, de mortier, de chape ou de colle à carrelage, en particulier de béton.

Fig. 1:

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2592953 A1
- EP 2168930 A1
- US 2021032162 A
- EP 3296278 A1

**Non-patent literature cited in the description**

- **TANG et al.** *Resources, Conservation & Recycling: X 6*, 2020, vol. 100036, 1-22
- **RODRÍGUEZ-GALÁN et al.** *Materials*, 2019, vol. 12 (208), 1-19
- **H.A. ABDEL-GAWWAD et al.** Recycling of concrete waste to produce ready-mix alkali activated cement. *Ceramics International*, 2018, https://doi.org/10.1016/j.ceramint.2018.01.042